# EUROPEAN PATENT APPLICATION

(11) **EP 3 770 018 A1**
(43) Date of publication of application: **27.01.2021**
(21) Application number: 20186450.1
(22) Date of filing: 17.07.2020
(51) Int. Cl.: B60Q 7/00, B60Q 1/52, B60Q 1/26

(54) **WARNING DEVICE**

(30) Priority: 22.07.2019 TW 108125854
(71) Applicant: Tsai, Chin-Hung, Taichung City 435 (TW)
(72) Inventor: Tsai, Chin-Hung, Taichung City 435 (TW)
(74) Representative: Davies, Gregory Mark

(57) **Abstract**

A warning device includes a supporting unit (1), a plurality of supporting frames (2) pivotally connected to the supporting unit (1), and a warning unit (3) . The warning unit (3) is mounted to the supporting frames (2) and configured to be driven by a slide seat (13) of the supporting unit (1), via the supporting frames (2), to be in an expanded state when a distal end portion (212) of each of the supporting frames (2) is at an expanded position, and to be in a collapsed state when the distal end portion (212) of each of the supporting frames (2) is at a collapsed position. The warning unit (3) includes at least one warning member (31) made of a flexible material, and defining a hollow region (32) when the warning unit (3) is in the expanded state.

## Description

The disclosure relates to a warning device, more particularly to a roadside warning device.

A conventional roadside warning sign is mainly used as a warning sign placed behind a vehicle when there has been a vehicle breakdown or traffic collision. The conventional roadside warning sign includes a triangular warning board, and a supporting frame that is for keeping the warning board upright. A user may have to spend a lot of time adjusting the placement of the conventional warning sign in order to place it stably on the ground so that wind does not move it, and so that it is visible to approaching traffic. The long amount of time needed to set up and adjust the placement of the conventional warning sign can be dangerous for the user because the conventional warning sign should be placed a distance from the vehicle and it is dangerous for the user to stand far from the vehicle on the roadside.

Moreover, the warning board of the conventional warning sign is rigid and bulky which makes the conventional warning sign inconvenient to store and transport.

Therefore, the object of the disclosure is to provide a warning device that can alleviate at least one of the drawbacks of the prior art.

According to the disclosure, a warning device includes a supporting unit, a plurality of supporting frames, and a warning unit.

The supporting unit includes a supporting rod that extends along an axis, a stationary seat that is fixedly disposed at one end of the supporting rod, and a slide seat that is connected to the supporting rod and that is slidable along the supporting rod relative to the stationary seat.

The supporting frames are equiangularly displaced about the axis. Each of the supporting frames has a connecting end portion that is pivotally connected to the stationary seat and a distal end portion that is opposite to the connecting end portion and that is connected to the slide seat, such that the slide seat is operable to drive each of the distal end portions of the supporting frames to pivot between an expanded position, where the distal end portion is distal from the supporting rod, and a collapsed position, where the distal end portion is proximal to the supporting rod.

The warning unit is mounted to the supporting frames and configured to be driven by the supporting frames to be in an expanded state when the distal end portion of each of the supporting frames is at the expanded position, and to be in a collapsed state when the distal end portion of each of the supporting frames is at the collapsed position. The warning unit includes at least one warning member that is made of a flexible material, and that surrounds the axis and defines a hollow region when the warning unit is in the expanded state.

Other features and advantages of the disclosure will become apparent in the following detailed description of the embodiments with reference to the accompanying drawings, of which:
FIG. 1 is a perspective view of a first embodiment of a warning device according to the disclosure;
FIG. 2 is a fragmentary sectional view taken along line II-II in FIG. 1;
FIG. 3 is a fragmentary sectional view taken along line III-III in FIG. 1;
FIG. 4 is a fragmentary sectional view of the embodiment, illustrating a warning unit of the embodiment in an expanded state;
FIG. 5 is another fragmentary sectional view of the embodiment, illustrating the warning unit in a collapsed state;
FIG. 6 is a schematic view illustrating the embodiment placed behind a vehicle;
FIG. 7 is a fragmentary perspective view of a second embodiment of the warning device according to the disclosure, illustrating a prop stand of the second embodiment in a non-propping position;
FIG. 8 is a fragmentary perspective view of the second embodiment, illustrating the prop stand at a propping position; and
FIG. 9 is a schematic top view of another embodiment of the warning device.

Before the present invention is described in greater detail, it should be noted that where considered appropriate, reference numerals or terminal portions of reference numerals have been repeated among the figures to indicate corresponding or analogous elements, which may optionally have similar characteristics.

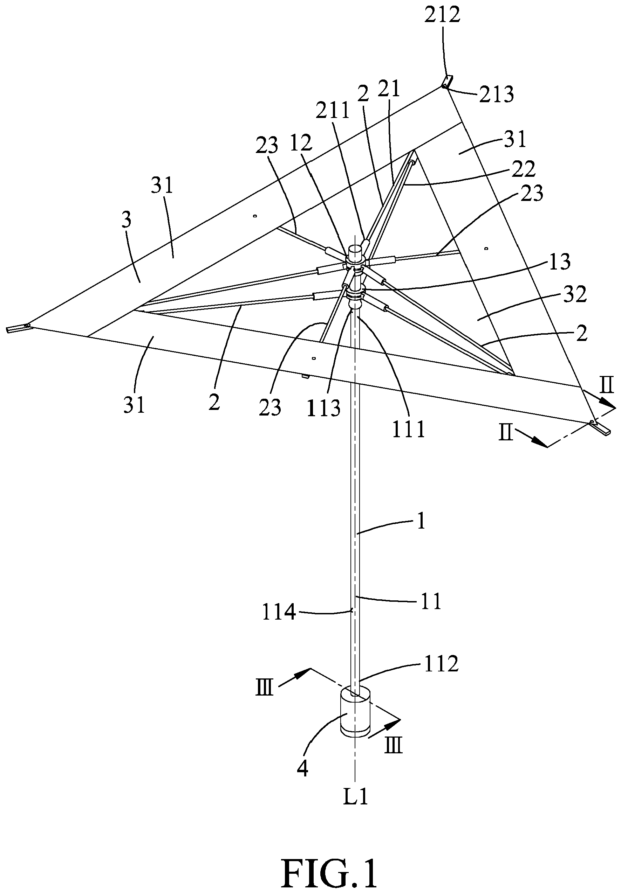

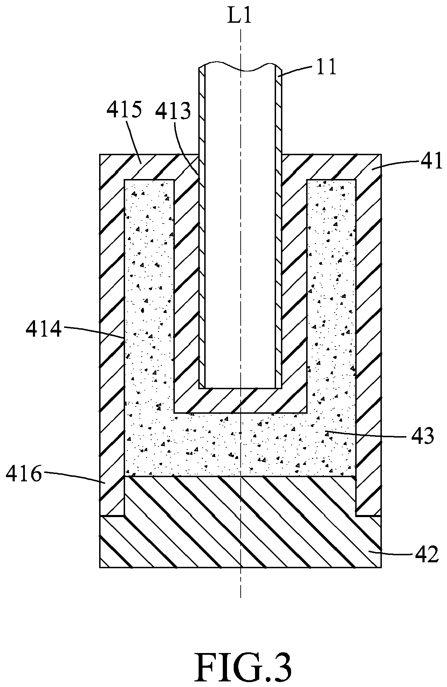

Referring to FIGS. 1 to 3, a first embodiment of a warning device according to the disclosure includes a supporting unit 1, a plurality of supporting frames 2, a warning unit 3, and a handle unit 4.

The supporting unit 1 includes a supporting rod 11 extending along an axis (L1), a stationary seat 12 fixedly disposed at one end of the supporting rod 11, a slide seat 13 connected to the supporting rod 11 and being slidable along the supporting rod 11 relative to the stationary seat 12, and upper and lower spring tabs 113, 114 protruding from the supporting rod 11. The supporting rod 11 has a first end portion 111 mounted to the stationary seat 12, and a second end portion 112 opposite to the first end portion 111. The upper spring tab 113 is disposed proximal to the first end portion 111, and the lower spring tab 114 is disposed proximal to the second end portion 114.

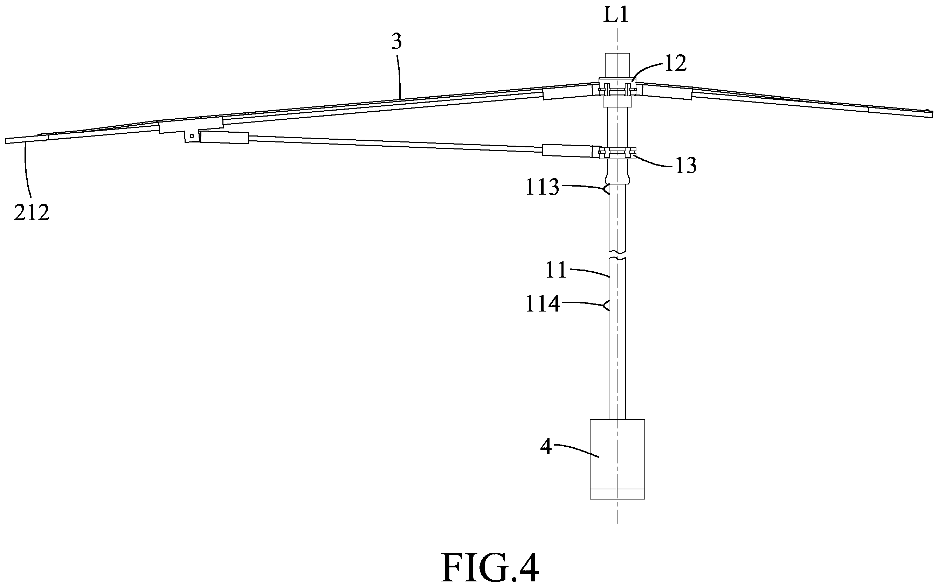

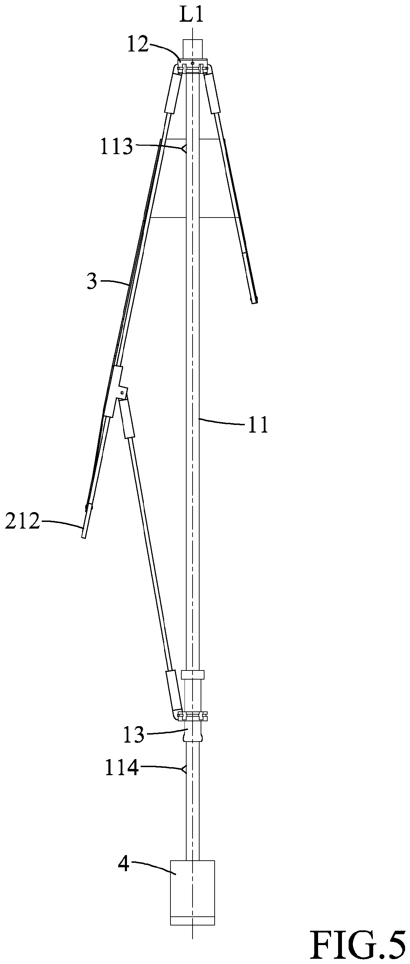

The supporting frames 2 are equiangularly displaced about the axis (L1). In this embodiment, the number of the supporting frames 2 is three. Each of the supporting frames 2 has a connecting end portion 211 pivotally connected to the stationary seat 12, and a distal end portion 212 opposite to the connecting end portion 211. The distal end portion 212 of each of the supporting frames 2 is connected to the slide seat 13, such that the slide seat 13 is operable to drive each of the distal end portions 212 of the supporting frames 2 to pivot between an expanded position (FIG. 4), where the distal end portion 212 is distal from the supporting rod 11, and a collapsed position (FIG. 5), where the distal end portion 212 is proximal to the supporting rod 11. In this embodiment, each of the supporting frames 2 includes an outer rod 21 pivotally connected to the stationary seat 12, and an inner rod 22 having opposite ends that are pivotally and respectively connected to the outer rod 21 and the slide seat 13. The outer rods 21 has opposite end portions serving respectively as the connecting end portion 211 and the distal end portion 212 of the supporting frame 2.

In this embodiment, the warning device further includes three auxiliary rods 23 that are displaced angularly about the axis (L1) for providing auxiliary support. Each of the auxiliary rods 23 has a shorter length than each of the supporting frames 2.

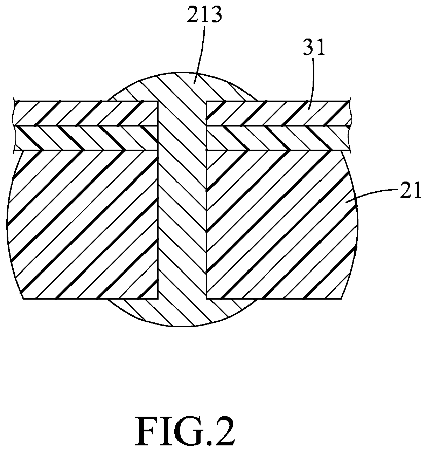

The warning unit 3 is mounted to the supporting frames 2 and is configured to be driven by the supporting frames 2 to be in an expanded state (FIG. 4) when the distal end portion 212 of each of the supporting frames 2 is at the expanded position, and to be in a collapsed state (FIG. 5) when the distal end portion 212 of each of the supporting frames 2 is at the collapsed position. The warning unit 3 includes at least one warning member 31 made of a flexible material, and surrounding the axis (L1) and defining a hollow region 32 when the warning unit 3 is in the expanded state. In this embodiment, the at least one warning member 31 includes three warning members 31 that form a hollow triangular structure when the warning unit 3 is in the expanded state which forms a warning pattern in the form of an equilateral triangle. Each vertex of the triangular structure is formed by overlapping ends of a corresponding pair of the warning members 31 and is mounted fixedly to a respective one of the supporting frames 2. In this embodiment, the warning members 31 are sewn to each other, and each vertex of the triangular structure of the warning unit 3 is riveted to the distal end portion 212 of the outer rod 21 of the respective one of the supporting frames 2 by a rivet 213 (see FIG. 2) . The distal end portion 212 of each of the supporting frames 2 protrudes out of the warning unit 3. Specifically, the distance between the stationary seat 12 and the tip of the distal end portion 212 of each of the supporting frames 2 is longer than that between the stationary seat 12 and the distal end of each vertex of the triangular structure of the warning unit 3. Each of the auxiliary rods 23 has an end connected pivotally to the stationary seat 12, and an opposite end riveted to a middle section of a respective one of the warning members 31. The auxiliary rods 23 are disposed alternately with the supporting frames 2.

The handle unit 4 is disposed on the second end portion 112 of the supporting rod 11. The handle unit 4 includes a handle body 41, a weighted member 43 disposed inside the handle body 41 and positioning a center of mass of the warning device proximal to the handle unit 4, and a plug cover 42 secured to the handle body 41 to retain the weighted member 43 inside the handle body 41. The handle body 41 has an end wall segment 415, and a surrounding wall segment 416 extending from the end wall segment 415. The end wall segment 415 is indented to form a first hole 413 that extends along the axis (L1), and the surrounding wall segment 416 cooperates with the end wall segment 415 to define a second hole 414 that surrounds the first hole 413 and that has an opening. In this embodiment, the second end portion 112 of the supporting rod 11 is inserted into the first hole 413, the weighted member 43 is received in the second hole 414, and the plug cover 42 is coupled to the opening of the second hole 414. In this embodiment, the weighted member 43 is made of gravel, but is not limited thus and, in other embodiments, may be made of cement, concrete, metal, etc..

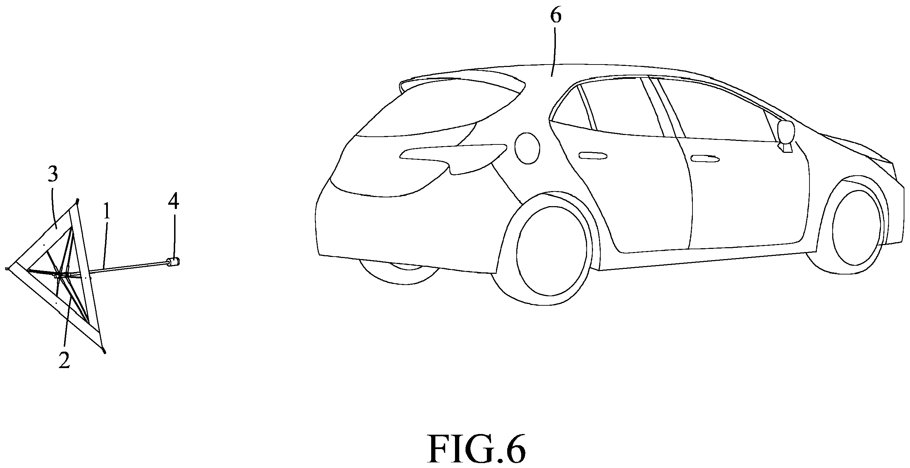

Referring to FIGS. 4 to 6, to convert the warning unit 3 to the expanded state, the slide seat 13 is moved along the supporting rod 11 and toward the stationary seat 12 to compress and slide over the upper spring tab 113, after which the upper spring tab 113 limits movement of the slide seat 13 away from the stationary seat 12. When the slide seat 13 is thus limited, the distal end portion 212 of each of the supporting rods 2 is in the expanded position, and the warning unit 3 is in the expanded state where the warning pattern is produced and where the hollow region 32 allows wind to flow through the warning device to thereby reduce wind resistance and allows the warning device to stand more stably on the ground. The warning device may be placed to the rear of a vehicle 6 to warn approaching traffic when there is a vehicle breakdown or a traffic collision. To convert the warning unit 3 to the collapsed state, the slide seat 13 is moved along the supporting rod 11 toward the handle unit 4 so that the distal end portion 212 of each of the supporting frames 2 is moved to the collapsed position. When the warning unit 3 is in the collapsed state, the slide seat 13 may further be moved toward the handle unit 4 to compress and slide over the lower spring tab 114, after which the lower spring tab 114 limits movement of the slide seat 13 toward the stationary seat 12.

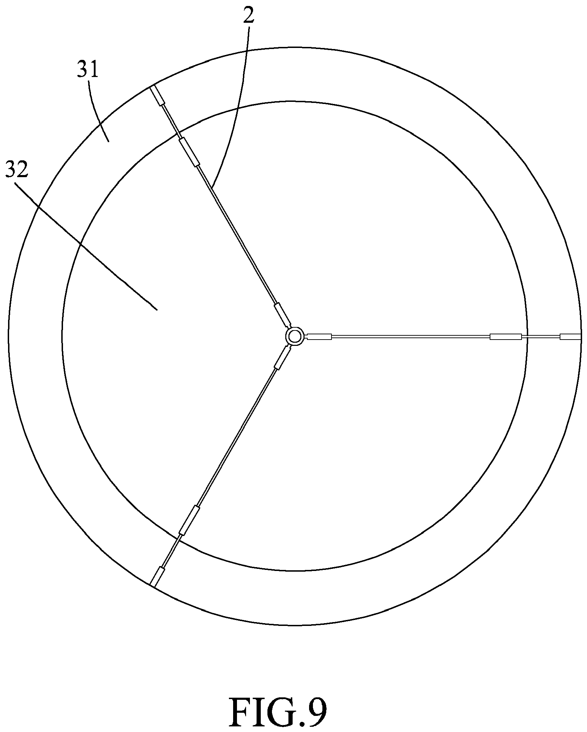

It should be noted that in other embodiments, the warning unit 3 may form a warning pattern in the form of a circle, or another polygon apart from triangles, such as a square. For example, the warning unit 3 may include one warning member 31 forming a circle pattern (see FIG. 9), or four warning members 31 each serving as one side of a square pattern (not shown), and number of the supporting frames 2 may be adjusted accordingly.

In sum, the benefits of the warning device of the disclosure lies in that, by mounting the warning unit 3 to the supporting frames 2 and through structural cooperation between the supporting unit 1 and the supporting frames 2, the warning unit 3 may be quickly and easily converted between the collapsed state and the expanded state, which reduces amount of time needed for process of setting up the warning device on the roadside. The warning device is also compact when the warning unit 3 is in the collapsed state, allowing for convenient storage and transport.

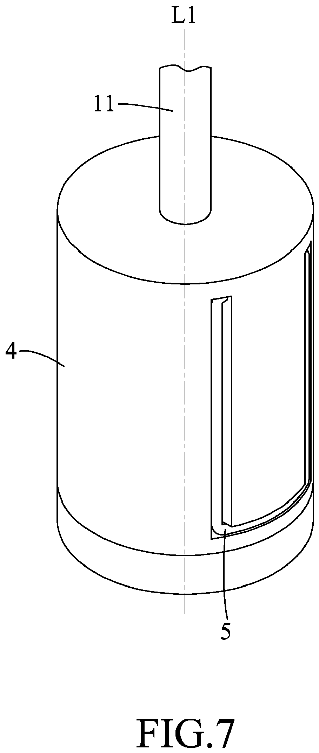

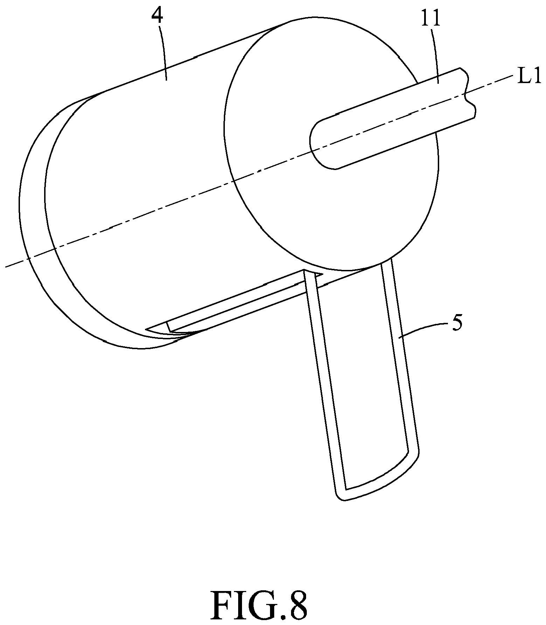

Referring to FIGS. 7 and 8, a second embodiment of a warning device is similar to the first embodiment, but differs in further including a prop stand 5 mounted to the handle unit 4. The prop stand 5 is pivotable relative to the handle unit 4 between a non-propping position (FIG. 7), where the prop stand 5 is substantially parallel to the axis (L1), and a propping position (FIG. 8), where the prop stand 5 extends obliquely to the axis (L1). The angle between the prop stand 5 and the axis (L1) may be adjusted to adjust an angle of the warning unit 3 to the ground to increase visibility of the warning pattern to approaching traffic. The second embodiment has the same advantages as the first embodiment.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A warning device comprising:
a supporting unit (1) including a supporting rod (11) that extends along an axis (L1), a stationary seat (12) that is fixedly disposed at one end of said supporting rod (11), and a slide seat (13) that is connected to said supporting rod (11) and that is slidable along said supporting rod (11) relative to said stationary seat (12);
a plurality of supporting frames (2) equiangularly displaced about the axis (L1), each of said supporting frames (2) having a connecting end portion (211) that is pivotally connected to said stationary seat (12) and a distal end portion (212) that is opposite to said connecting end portion (211) and that is connected to said slide seat (13), such that said slide seat (13) is operable to drive each of said distal end portions (212) of said supporting frames (2) to pivot between an expanded position, where said distal end portion (212) is distal from said supporting rod (11), and a collapsed position, where said distal end portion (212) is proximal to said supporting rod (11); and
a warning unit (3) mounted to said supporting frames (2) and configured to be driven by said supporting frames (2) to be in an expanded state when said distal end portion (212) of each of said supporting frames (2) is at the expanded position, and to be in a collapsed state when said distal end portion (212) of each of said supporting frames (2) is at the collapsed position;
said warning device **characterized in that** said warning unit (3) includes at least one warning member (31) that is made of a flexible material, and that surrounds the axis (L1) and defines a hollow region (32) when said warning unit (3) is in the expanded state .

2. The warning device as claimed in claim 1, further **characterized in that** said warning device further comprises a plurality of auxiliary rods (23) displaced angularly about the axis (L1) and disposed alternately with said supporting frames (2), each of said auxiliary rods (23) having a shorter length than each of said supporting frames (2).

3. The warning device as claimed in claim 2, further **characterized in that**:
the number of said supporting frames (2) is three; and
said at least one warning member (31) includes three warning members (31).

4. The warning device as claimed in claim 3, further **characterized in that**:
said warning members (31) form a hollow triangular structure when said warning unit (3) is in the expanded state, each vertex of said triangular structure being formed by overlapping ends of a corresponding pair of said warning members (31) and being mounted fixedly to a respective one of said supporting frames (2);
said distal end portion (212) of each of said supporting frames (2) protrudes out of said warning unit (3); and
each of said auxiliary rods (23) has an end connected pivotally to said stationary seat (12), and an opposite end mounted to a middle section of a respective one of said warning members (31).

5. The warning device as claimed in claim 4, further **characterized in that** each of said supporting frames (2) includes:
an outer rod (21) pivotally connected to said stationary seat (12), and having opposite end portions that serve respectively as said connecting end portion (211) and said distal end portion (212) of said supporting frame (2), each vertex of said triangular structure of said warning unit (3) being mounted fixedly to said outer rod (21) of the respective one of said supporting frames (2); and
an inner rod (22) having opposite ends that are pivotally and respectively connected to said outer rod (21) and said slide seat (13).

6. The warning device as claimed in claim 5, further **characterized in that** each vertex of said triangular structure of said warning unit (3) is riveted to said outer rod (21) of the respective one of said supporting frames (2).

7. The warning device as claimed in any one of the previous claims, further **characterized in that** said supporting rod (11) of said supporting unit (1) has a first end portion (111) mounted to said stationary seat (12), and a second end portion (112) opposite to said first end portion (111), said warning device further comprising a handle unit (4) disposed on said second end portion (112) of said supporting rod (11).

8. The warning device as claimed in claim 7, further **characterized in that** said warning device further comprises a prop stand (5) mounted to said handle unit (4) and pivotable relative to said handle unit (4) between a non-propping position, where said prop stand (5) is substantially parallel to said axis (L1), and a propping position, where said prop stand (5) extends obliquely to the axis (L1).

9. The warning device as claimed in claim 7 or 8, further **characterized in that** said handle unit (4) includes a handle body (41), a weighted member (43) disposed inside said handle body (41) and positioning a center of mass of said warning device proximal to said handle unit (4), and a plug cover (42) secured to said handle body (41) to retain said weighted member (43) inside said handle body (41).

10. The warning device as claimed in claim 9, further **characterized in that**:
said handle body (41) has
an end wall segment (415) indented to form a first hole (413) that extends along the axis (L1), and
a surrounding wall segment (416) extending from said end wall segment (415), and cooperating with said end wall segment (415) to define a second hole (414) that surrounds said first hole (413) and that has an opening;
said second end portion (112) of said supporting rod (11) is inserted into said first hole (413); and
said weighted member (43) is received in said second hole (414); and
said plug cover (42) is coupled to said opening of said second hole (414).
